# EUROPÄISCHE PATENTSCHRIFT

(11) **EP 0 889 578 B1**
(45) Veröffentlichungstag und Bekanntmachung des Hinweises auf die Patenterteilung: **26.02.2003**
(21) Anmeldenummer: 98112108.0
(22) Anmeldetag: 01.07.1998
(51) Int. Cl.: H02M 7/217

(54) **Vorrichtung zur Erzeugung eines netzsynchronen Signals für die Steuerung eines elektrischen Antriebs**
Method for generating a signal synchronous with the network for the control of an electrical drive
Procédé pour la géneration d'un signal synchronisé avec le réseau pour la commande d'un actionnement électrique

(30) Priorität: 04.07.1997 DE 19728643
(43) Veröffentlichungstag der Anmeldung: 07.01.1999
(73) Patentinhaber: SOMFY Feinmechanik und Elektrotechnik GmbH, 72108 Rottenburg (DE)
(72) Erfinder: Tobias, Ralph, 76534 Baden-Baden (DE); Siegwart, Bernhard, 71723 Grossbottwar (DE)
(74) Vertreter: Jakelski, Joachim, Dr.

(56) Entgegenhaltungen:
- PATENT ABSTRACTS OF JAPAN vol. 1997, no. 01, 31. Januar 1997 (1997-01-31) & JP 08 225282 A (TOSHIBA CORP), 3. September 1996 (1996-09-03)

## Beschreibung

### Stand der Technik

Die Erfindung geht aus von einer Vorrichtung zur Erzeugung eines netzsynchronen Signals für die Steuerung eines elektrischen Antriebs, insbesondere für eine Phasenanschnittschaltung bei einem Garagentorantrieb, gemäß der im Oberbegriff des Anspruchs 1 definierten Gattung.

Bei einer Vorrichtung zur Erzeugung eines netzsynchronen Signals für die Steuerung eines elektrischen Antriebs, insbesondere für eine Phasenanschnittschaltung bei einem Garagentorantrieb, ist es heute üblich, einen Gleichstrommotor zu verwenden, der von einem Gleichrichter gespeist wird, welcher seinerseits über einen Transformator mit Wechselspannung versorgt wird.

Bei einem einfachen Garagentorantrieb wird der Gleichstrommotor nur ein- oder ausgeschaltet. Diese schlagartige Bewegung der Tores verursacht starke Geräusche in der Tormechanik. Bekannt ist auch ein einstufiges Umschalten der Geschwindigkeit. Dies mindert die Geräusche zwar, jedoch wirkt die relativ große, ruckartige Geschwindigkeitsänderung durch den großen Spannungshub nach wie vor störend. Weiterhin werden die Tormechanik, die Kette und der Motor dabei immer noch stark belastet.

Ein recht aufwendiger, jedoch sehr komfortabler Garagentorantrieb verwendet eine Phasenanschnittschaltung, durch welche ein Antrieb hoher Laufruhe und hohen Komforts zur Verfügung gestellt ist. Um den Motoranlauf des Antriebs möglichst komfortabel und ruhig zu machen, ist ein langsames Beschleunigen beim Loslaufen der Tores und ein sanftes Verzögern beim Erreichen der Endlagen optimal. Dies wird durch eine Phasenanschnittsteuerung mittels eines Triac erreicht. Für eine Phasenanschnittschaltung ist die Erkennung der Nullstellen notwendig. Bei bekannten Lösungen ist zur Erkennung der Nullstellen, die für die Steuerung notwendig sind, ein separater kleiner Transformator, der meist auf der Leiterplatte mit eingebaut ist, der sogenannte Leiterplatten-Transformator vorgesehen. Weiterhin ist ein Gleichrichter vorgesehen, der die Ausgangsspannung des Leiterplatten-Transformators gleichrichtet. Aus diesem Signal werden die Nullstellen ermittelt und der Steuerung zugeführt. Der Leiterplatten-Transformator muß dabei die gleiche Phasenlage aufweisen wie der den Gleichstrommotor versorgende Leistungstransformator. Die während des Motorlaufs auftretende Verzerrung der Motorspannung ist am Leiterplatten-Transformator nicht vorhanden.

Es ist einleuchtend, daß dieser Aufwand für die Gewinnung der für die Steuerung notwendigen Nullstellensignale sehr aufwendig und kostenträchtig ist.

### Vorteile der Erfindung

Die erfindungsgemäß gestaltete Vorrichtung zur Erzeugung eines netzsynchronen Signals mit den kennzeichnenden Merkmalen des Anspruchs 1 hat demgegenüber den Vorteil, daß der separate Leiterplatten-Transformator samt Gleichrichter entfällt, wodurch der Aufwand wesentlich geringer ist.

Gemäß der Erfindung ist prinzipiell zur Realisierung vorgesehen, daß aus dem Signal des Transformators ein Netzsynchronisationssignal gewonnen und der Steuerung als Ansteuersignal zugeführt wird und daß während des Laufs des Gleichstrommotors die Steuerung selbst das Synchronisationsignal erzeugt.

Durch die in den weiteren Ansprüchen niedergelegten Maßnahmen sind vorteilhafte Weiterbildungen und Verbesserungen der im Anspruch 1 angegebenen Vorrichtung möglich.

Gemäß einer besonders zweckmäßigen und vorteilhaften Ausgestaltung der Erfindung wird das Netzsynchronisationssignal bei Stillstand des Gleichstrommotors aus der Sekundärspannung des Transformators gewonnen. In diesem Zustand ist keine Verzerrung des Signals zu befürchten.

Entsprechend einer vorteilhaften Weiterbildung der Erfindung wird das Netzsynchronisationssignal aus der gleichgerichteten Spannung am Ausgang des Gleichrichters gewonnen.

Entsprechend einer besonders vorteilhaften Verwendung der Vorrichtung ist vorgesehen, daß sie bei einer Phasenanschnittschaltung für die Steuerung des Gleichstrommotors verwendet wird, die vorteilhafterweise einen Triac enthält.

Entsprechend einer vorteilhaften Weiterbildung der Erfindung wird sie insbesondere generell angewandt für Steuerungen, bei denen von der Konstanz der Netzfrequenz über eine gewisse, in der Länge ausreichende Zeitspanne ausgegangen werden kann. Der Einsatz ist dabei nicht auf Phasenanschnittschaltungen, auch nicht auf deren Einsatz bei Garagentorantrieben, oder ähnliches beschränkt.

Gemäß einer weiteren besonders vorteilhaften und Aufwand sparenden Ausgestaltung der Erfindung wird die Gewinnung des Synchronisationssignals aus dem Signal des Transformators und/oder die Erzeugung des Synchronisationssignals während des Laufs des Gleichstrommotors mittels der Steuersoftware des Steuerung durchgeführt.

Die Erfindung ist überall dort mit Vorteil einzusetzen, wo ein netzsynchrones Signal gebraucht wird, jedoch kein separater Transformator für die Erzeugung eingesetzt werden soll und wo über eine für die Anwendung ausreichende Zeitspanne von konstanter Netzfrequenz ausgegangen werden kann. Welche Netzfrequenz es ist, beispielsweise 50 oder 60 Hz, ist dabei in vorteilhafter Weise von keiner Bedeutung.

In vorteilhafter Weise ermöglicht die Erfindung zum Beispiel den kostengünstigen Aufbau eines Antriebs, der einen an den gewünschten Bewegungsablauf sehr komfortabel angepaßten Geschwindigkeitsverlauf ermöglicht, und dies bei Schonung der beteiligten Bauteile sowie erheblicher Geräuschverminderung.

### Zeichnung

Die Erfindung ist anhand des in der Zeichnung dargestellten Ausführungsbeispiels in der nachfolgenden Beschreibung näher erläutert. Es zeigt:

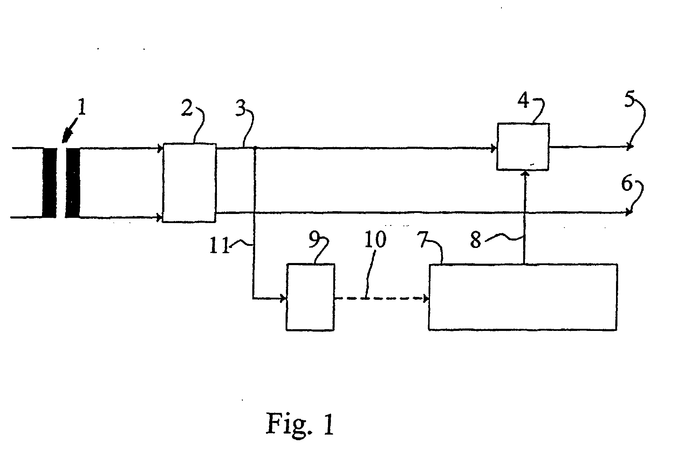

- Fig. 1: schematisch das Blockschaltbild einer erfindungsgemäß gestalteten Vorrichtung.

### Beschreibung des Ausführungsbeispiels

In Fig. 1 ist schematisch das Blockschaltbild einer erfindungsgemäß gestalteten Vorrichtung zur Erzeugung eines netzsynchronen Signals für die Steuerung eines elektrischen Antriebs dargestellt. Über einen Transformator 1, den Leistungstransformator, wird ein Gleichrichter 2 mit Wechselspannung versorgt. An eine Ausgangsklemme 3 des Gleichrichters 2 ist ein Triac 4 angeschaltet, dessen Ausgangsklemme 5 einen Anschlußpunkt für einen nicht dargestellten Gleichstrommotor bildet. Der andere Anschlußpunkt für den Gleichstrommotor ist die zweite Ausgangsklemme 6 des Gleichrichters 2. Somit kann der Gleichstrommotor mittels des gesteuerten Triacs 4 mit derjenigen Energie versorgt werden, die dem jeweiligen Anlaß, Bewegungsablauf bzw. Geschwindigkeit entspricht.

Zur Versorgung des Triacs 4 mit geeigneten Steuersignalen ist eine Steuerung 7 vorgesehen, die über eine Leitung 8 mit dem Triac 4 verbunden ist. Wie die Steuerung 7 im Einzelnen arbeitet, ist hier weniger relevant. Wesentlich ist, daß beispielsweise über eine Schaltung 9 das notwendige Synchronsignal erzeugt und über eine Leitung 10 der Steuerung 7 zu geeignetem Zeitpunkt zur Verfügung gestellt wird. Der Schaltung 9 ist über eine Leitung 11 mit dem Ausgang 3 des Gleichrichters 2 verbunden.

Erfindungsgemäß wird das netzsynchrone Signal aus dem Signal des Transformators 2 gewonnen und der Steuerung 7 als Synchronsignal auf Leitung 10 zugeführt. Während des Laufs des Gleichstrommotors erzeugt die Steuerung 7 selbst das notwendige, der Netzfrequenz entsprechende, Synchronisationsignal. Wegen der möglichen Verzerrungen des Signals beim Lauf des Gleichstrommotors wird das Synchronsignal von der Schaltung 9 nur bei Stillstand des Gleichstrommotors aus der Sekundärspannung des Transformators 1 gewonnen. Im dargestellten Ausführungsbeispiel wird dazu der Schaltung 9 als Eingangssignal das auf Leitung 3 anstehende Ausgangssignal des Gleichrichters 2 zugeführt, insbesondere die gleichgerichtete Spannung.

Die erfindungsgemäße Vorrichtung für die Erzeugung eines netzsynchronen Signals ist besonders vorteilhaft in einer Phasenanschnittschaltung 7 zu verwenden, die, wie dargestellt, vorzugsweise einen Triac 4 als die Leistung des Gleichstrommotors steuerndes Bauteil enthält. Sie ist generell immer bei solchen Steuerungen anwendbar, bei denen von einer genügenden Konstanz der Netzfrequenz über eine gewisse, in der Länge ausreichende Zeitspanne ausgegangen werden kann. Eine solche Zeitspanne kann bei einem Garagentorantrieb beispielsweise in der Größenordnung von 30 Sekunden liegen.

Die Erzeugung der der Netzfrequenz entsprechenden netzsynchronen Signale in der Steuerung 7, aus der das Ansteuersignal für den Phasenanschnitt abgeleitet wird, kann mittels der Steuersoftware erfolgen, ebenso wie die Gewinnung des Synchronisationssignals aus dem Signal des Transformators. Dadurch ist kein besonderer zusätzlicher Schaltungsaufwand notwendig. Während des Motorlaufs erzeugt die Steuerung 7 die der Netzfrequenz entsprechenden Synchronisationssignale selbst und sobald der Motor wieder steht, kann die generierte Frequenz mit der tatsächlichen Netzfrequenz verglichen und gegebenenfalls angepaßt werden.

Die Erfindung bietet also den wesentlichen Vorteil, mit insgesamt erheblich geringerem Schaltungsaufwand sehr flexibel ein netzsynchrones Signal für die Steuerung eines elektrischen Antriebs erzeugen zu können.

## Patentansprüche

1. Vorrichtung zur Erzeugung eines netzsynchronen Signals für die Steuerung eines elektrischen Antriebs, insbesondere für eine Phasenanschnittschaltung bei einem Garagentorantrieb, mit einem Gleichstrommotor, der von einem Gleichrichter (2) gespeist wird, welcher seinerseits über einen Transformator (1) mit Wechselspannung versorgt wird, wobei eine Steuerung (7) die dem Gleichstrommotor zugeführte Gleichspannung steuert,
**dadurch gekennzeichnet, daß**
aus der Wechselspannung des Transformators (1) ein Netzsynchronisationssignal gewonnen und der Steuerung (7) als Ansteuersignal zugeführt wird und daß während des Laufs des Gleichstrommotors die Steuerung (7) selbst das Synchronisationsignal erzeugt.

2. Vorrichtung nach Anspruch 1, **dadurch gekennzeichnet, daß** das Netzsynchronisationssignal bei abgeschaltetem Gleichstrommotor aus der Sekundärspannung des Transformators (1) gewonnen wird.

3. Vorrichtung nach Anspruch 1 oder 2, **dadurch gekennzeichnet, daß** das Netzsynchronisationssignal aus der gleichgerichteten Spannung am Ausgang (3) des Gleichrichters (2) gewonnen wird.

4. Vorrichtung nach Anspruch 1, 2 oder 3, **dadurch gekennzeichnet, daß** sie bei einer Phasenanschnittschaltung (4, 7) für die Steuerung des Gleichstrommotors verwendet wird.

5. Vorrichtung nach Anspruch 4, **dadurch gekennzeichnet, daß** die Phasenanschnittschaltung einen Triac (4) enthält.

6. Vorrichtung nach einem der vorigen Ansprüche, **dadurch gekennzeichnet, daß** sie angewandt wird für Steuerungen, bei denen von der Konstanz der Netzfrequenz über eine gewisse, in der Länge ausreichende Zeitspanne ausgegangen werden kann.

7. Vorrichtung nach einem der vorigen Ansprüche, **dadurch gekennzeichnet, daß** die Gewinnung des Synchronisationssignals aus dem Signal des Transformators (1) und/oder die Erzeugung des Synchronisationssignals während des Laufs des Gleichstrommotors mittels der Steuersoftware der Steuerung (7) durchgeführt wird.

## Claims

1. A device for generating a mains-synchronous signal for the control means of an electric drive, in particular for a phase-angle circuit in a garage door drive, comprising a direct-current motor powered by a rectifier (2) which for its part is supplied with alternating voltage via a transformer (1), wherein a control means (7) controls the direct voltage supplied to the direct-current motor, **characterised in that** a mains synchronisation signal is obtained from the alternating voltage of the transformer (1) and is supplied to the control means (7) as a trigger signal, and **in that** the control means (7) itself generates the synchronisation signal while the direct-current motor is running.

2. A device according to claim 1, **characterised in that** the mains synchronisation signal is obtained from the secondary voltage of the transformer (1) when the direct-current motor is switched off.

3. A device according to claim 1 or 2, **characterised in that** the mains synchronisation signal is obtained from the rectified voltage at the output (3) of the rectifier (2).

4. A device according to claim 1, 2 or 3, **characterised in that** it is used in a phase-angle circuit (4, 7) for controlling the direct-current motor.

5. A device according to claim 4, **characterised in that** the phase-angle circuit contains a triac (4).

6. A device according to any one of the preceding claims, **characterised in that** it is used for control means in which the constancy of the mains frequency over a certain, sufficiently long period can be taken as a basis.

7. A device according to any one of the preceding claims, **characterised in that**, by means of the control software of the control means (7), the synchronisation signal is obtained from the signal of the transformer (1) and/or the synchronisation signal is generated while the direct-current motor is running.

## Revendications

1. Dispositif pour générer un signal synchronisé avec le réseau, pour la commande d'un actionnement électrique, notamment pour le circuit de démarrage des phases de l'entraînement d'une porte de garage, comprenant un moteur à courant continu alimenté par un redresseur (2) lui-même alimenté en courant alternatif par un transformateur (1), le courant continu alimentant le moteur étant assujetti à une commande (7),
**caractérisé en ce qu'**
à partir de la tension alternative du transformateur (1) on génère un signal de synchronisation du réseau qui est transmis à la commande (7) comme signal de commande, et pendant la rotation du moteur à courant continu, la commande (7) elle-même produit le signal de synchronisation.

2. Dispositif selon la revendication 1,
**caractérisé en ce que**
le signal de synchronisation du réseau, quand le moteur est coupé, est produit à partir de la tension du secondaire du transformateur (1).

3. Dispositif selon la revendication 1 ou 2,
**caractérisé en ce que**
le signal de synchronisation du réseau est produit à partir de la tension redressée existant à la sortie (3) du redresseur (2).

4. Dispositif selon la revendication 1, 2 ou 3,
**caractérisé en ce qu'**
il est utilisé dans un circuit de démarrage de phases (4, 7) pour commander le moteur à courant continu.

5. Dispositif selon la revendication 4,
**caractérisé en ce que**
le circuit de démarrage de phases comprend un triac (4).

6. Dispositif selon l'une des revendications précédentes,
**caractérisé en ce qu'**
il est utilisé pour des commandes dans lesquelles on peut partir de la constance de la fréquence du réseau au-delà d'un certain délai suffisamment long.

7. Dispositif selon l'une des revendications précédentes,
**caractérisé en ce que**
la production du signal de synchronisation à partir du signal du transformateur (1) et/ou la production du signal de synchronisation est assurée par l'intermédiaire du software de la commande (7).
